# EUROPEAN PATENT SPECIFICATION

(11) **EP 3 601 447 B1**
(45) Date of publication and mention of the grant of the patent: **18.08.2021**
(21) Application number: 18720803.8
(22) Date of filing: 23.03.2018
(51) Int. Cl.: B29B 17/02, C09D 5/00, B07C 5/34

(54) **A COATING MATERIAL FOR MARKING PLASTICS, A METHOD FOR MARKING PLASTICS, A METHOD FOR IDENTIFICATION OF MARKED PLASTICS AND THEIR APPLICATION IN SORTING PLASTIC WASTE**
BESCHICHTUNGSMATERIAL ZUM MARKIEREN VON KUNSTSTOFFEN, VERFAHREN ZUM MARKIEREN VON KUNSTSTOFFEN, VERFAHREN ZUM IDENTIFIZIEREN VON MARKIERTEN KUNSTSTOFFEN UND DEREN VERWENDUNG ZUM SORTIEREN VON KUNSTSTOFFABFÄLLEN
MATÉRIAU DE REVÊTEMENT POUR LE MARQUAGE DES MATIÈRES PLASTIQUES, PROCÉDÉ DE MARQUAGE DES MATIÈRES PLASTIQUES, PROCÉDÉ D'IDENTIFICATION DES MATIÈRES PLASTIQUES MARQUÉES ET LEUR APPLICATION DANS LE TRI DES DÉCHETS PLASTIQUES

(30) Priority: 27.03.2017 PL 42100817
(43) Date of publication of application: 05.02.2020
(73) Proprietor: Ergis S.A., 00-349 Warszawa (PL); Innovalab Sp. z o.o., 30-412 Kraków (PL)
(72) Inventor: NOWICKI, Tadeusz, 01-625 Warszawa (PL); SAWICZ-KRYNIGER, Katarzyna, 31-636 Kraków (PL); TABAK, Dominik, 32-400 Myslenice (PL)
(74) Representative: Radlowski, Jakub
(86) International application number: PCT/PL2018/000033
(87) International publication number: WO 2018/182437

(56) References cited:
- WO-A1-03/105075
- WO-A2-00/44508
- US-A1- 2004 029 137
- US-A1- 2005 099 475
- US-A1- 2006 163 492
- US-A1- 2016 101 639

## Description

The object of the invention is a coating material for marking plastics, a method for marking plastics and a method for identification of marked plastics.

Global economy increasingly uses petroleum-derivative plastics. Different types of plastics show a broad range of physicochemical properties and are relatively easy to form and process, due to their versatility they play an extremely important role in the global economy and they find various applications.

Recycling of plastic waste is still a challenge, even in highly developed countries. The annual worldwide production of consumer packages made of plastics was 25 million tonnes in 2015. Most of these materials were not recycled after use, but landfilled (Plastics - The Facts 2015, Plastics Europe).

In Poland, about 1.47 million tonnes of post-consumer plastic waste was created in 2012; 24% was recycled, 17% was used for energy recovery, and the remaining 59% was sent to landfill. For comparison, in European Union in 2012, 26% of post-consumer plastic waste was recycled, 36% was used for energy recovery and 38% went to landfill (Plastics Industry in Poland 2013). Therefore, the performance of processing plastic waste is much lower than the performance of other secondary raw materials, such as paper, glass and aluminium. Plastic waste in vast majority remain in waste dumps in non-sorted form, mixed with other waste. This kind of proceeding is an obvious loss of precious material derived from petroleum, whose resources are slowly being depleted.

The development of recycling technologies has been focusing so far mainly on the processing of used bottles of polyethylene terephthalate (PET). The efficiency of PET recovery is above 30%, and the recycling process itself has been optimised and mechanized. PET is one of the most frequently used plastic, therefore, its recovery is particularly important for economic reasons.

A particular problem in plastic waste management is the waste consisting of multi-layer materials, such as multi-layer films and articles made of them. Commonly used multi-layer materials, such as food packaging films, trays, soft packagings, blisters, industrial films, used in many industries (e.g. construction, transport, agriculture, pharmacy) are composite materials consisting of many plastics, like PE, PET, EVOH, PVC, PA.

Multi-layer plastic materials are a large and heterogeneous group of materials, showing different physicochemical properties and they often require specific methods of processing their components. Difficulties in segregation of waste coming from multi-layer plastics and their high diversity prevent to obtain, in waste sorting plants, clean streams of one-type materials, which could be then submitted for further processing and recovery. Some reports appeared on innovative technology of plastic separation in a multi-layer material, allowing to recover for example PE or PET (EP 2650324).

It is estimated that 800,000 tonnes of multi-layer trays made of PET, containing also barrier layers made of several layers of other plastics, are placed on the European market annually. Waste from multi-layer plastics (including PET trays) are incompatible with recovered clear raw materials, such as polyolefins or PET from drink packagings. Thus, multi-layer materials constitute a serious problem in the recycling world and they significantly burden the environment.

The lack of possibility to recycle multi-layer plastics means large material losses, since, for example, about 1.9 kg of petroleum is needed to produce 1 kg of PET. On the other hand, energy recovery during the combustion of PET waste highly affects the environment, because the combustion of 1 kg PET emits 1 kg of CO₂ and other toxic gases (Vest H.: Production and Recycling of PET-Bottles. InfoGate. 2003).

An unresolved problem in recycling multi-layer plastics is the lack of technology allowing to sort them according to groups of plastics they are made of. Classic sorters used in recycling, involving analytic methods, such as FTIR spectroscopy, UV-VIS spectroscopy or roentgenography, sort the waste, among other criteria, according to the type of material they are made of. For example, it is possible to separate paper, metal and glass from plastics or the waste made of mono-material plastic. However, it is not possible at present to identify, define and separate multi-layer waste made simultaneously of several plastics.

At present, the wastes from multi-layer plastics are not submitted to recycling. Most of them is landfilled, and only a part is used in waste combustion plants and converted into heat energy. Such an approach is an obvious wastage of precious raw materials, which could have been effectively used again, and it contributes to increasing greenhouse gas emission into the atmosphere.

There are methods of marking plastics, involving fluorescent organic compounds which are added into plastic materials. When it comes to this solution, the problem lies in the presence of common additives for plastics, such as optical brighteners, UV stabilizers etc., added to plastics in order to improve their look and prevent them from yellowing and ageing. Optical brighteners absorb radiation in the range of 300-410 nm and they also have a broad range of spectral emission (440-550 nm), overlapping the desired range of absorption and emission of potential fluorescent markers. If the material intended for marking contains, for example, an optical brightener, it is necessary to use a marker with an emission outside the range of emission of the optical brightener, in order to ensure a possibility to differentiate, during the detection process, the marker signal from the signal originating in the marked material. Application of markers emitting electromagnetic radiation outside the range of the brightener emission is limited by their absorption in the VIS range of spectrum, which means that they are intensively coloured, even in a low concentration.

There is a known method of marking plastic materials with lacquers containing dispersed fluorescent markers; these lacquers are applied directly on the materials intended for marking (POLYMARK Report *"Removable Identification Technology to Differentiate Food Contact PET in Mixed Waste Streams: Interim Report*"). Then, detection is performed by fluorimetry. The advantages of this method are: simplicity, low cost and high fluorescence yield of the markers used. Unfortunately, this method requires the use of a significant number of additives, such as hyperdispersants, emulsifiers, anti-foaming agents and stabilizers in order to prepare appropriate dispersion. Moreover, the thickness of a lacquer layer applied by spraying amounts at several dozen of micrometres, while the lacquer is applied on a finished product, which creates the need of performing the process of material marking at package producers' sites. An unquestionable weakness of this method is also a low resolution of fluorescence spectrum. Colourless markers used in this method have a fluorescence characteristics similar to the characteristics of optical brighteners, which gives faint possibilities to use the code (for a larger number of markers it is possible that interferences and quenching will appear). This method is also problematic during detection of colourful plastics.

There is a known method of marking plastics, consisting of applying a lacquer, containing fluorescent markers, on a surface of a plastic packaging in the final step of its production (Final Report NEXTEK *"Optimising the use of machine readable inks for food packaging sorting*"). In this method it is also intended to apply the lacquer on labels. A nitrocellulose lacquer, with addition of organic and inorganic markers, is used as a coating. This method allows for efficient macro-sorting of waste, but there is no possibility of sorting flakes. An unquestionable weakness of this method is the lack of possibility to mark plastics before they are thermoformed. It is also necessary to use UV stabilizers due to marker ageing. Due to the use of large concentrations of markers in the lacquer, in the range of 0.5-5%, and the use of expensive inorganic markers, containing rare earth metals, the described method is costly.

The method presented above includes also a system of detection of marked plastics with a modified industrial NIR detector, with LED or halogen lamp as an excitation source.

There is a known method of marking plastics by adding fluorescent markers directly to plastics, during the step of plastic production ("*Automated sorting of polymer flakes*: *Fluorescence labeling and development of a measurement system prototype*", Waste Management; Heinz Langhals *"Binary Fluorescence Labeling for the Recovery of Polymeric Materials for Recycling*")*.* This method uses perylene derivatives, showing fluorescence in the range of 450-800 nm, as markers. Both micro- and macrosorting are possible. The method allows for a quick detection at marker concentration of a few ppm (100 ppm for black plastics), and the reading precision exceeds 99% for 12 classes of marked plastics, at a capacity of about 300 kg flakes/h. Disadvantages of this method include problems with detection of colourful plastics and a possibility to use only 4 markers, which gives only 15 code variants when using binary system. Additionally, the markers are permanently incorporated into the plastic material and it is not possible to remove them later. Fluorescent markers (perylene derivatives) are expensive themselves, and their synthesis is complex. There is also a risk of colouring of the marked plastics, because perylene derivatives have intensive colour. Potentially, plastics marked with perylene derivatives (polycyclic aromatic hydrocarbons, PAH) can have a negative impact on the safety of food stored in them.

The method presented above includes also a system of detection of plastics, using the so-called "singularity unit", ordering the flakes and localized at the beginning of sorting conveyor. Within the line, a system for examining flake morphology is also placed, using the light of a white LED and a fast industrial camera. The speed of spectrophotometer, comprising of a CCD-type camera and a diffraction mesh, is 300,000 spectra/s.

There is also known the *"Method of sorting and verifying type of plastic containers"* described in the international application published under the number WO/0044508. This application describes the method of covering surfaces of plastic containers with predetermined fluorescent markings on external or internal surfaces, which allow identification of the marked containers according to their content, use or composition.

There is an unmet need to develop a method allowing for marking, detection and sorting of multi-layer and/or multi-component materials made of plastics, in order to group them in a way permitting their later efficient recovery and reuse.

A coating material for marking plastics, a method for marking plastics, a method for identification of marked plastics and their application in sorting plastic waste according to the invention solve the problems known from the state-of-art and allow for creation of a method of effective sorting of multi-layer plastics in order to manage them by recycling and minimize the amount of waste, which is beneficiary for material and economic reasons.

### Essence of the invention

A coating material for marking plastics, containing a base of the coating material and fluorescent markers, according to the invention, is characterized in that it contains one or more types of fluorescent markers, showing fluorescence in any qualitative combination, forming an identification code, readable by using fluorimetric analysis of its composition. Preferably, the coating material shows adhesion to the marked plastic and it is removable from its surface by means of appropriately chosen washing agents, organic solvents or their mixtures. Alternatively, the coating material shows adhesion to the marked plastic and it is irremovable from its surface while physicochemical properties of this plastic are maintained. Fluorescent markers have a form of appropriately selected organic chemical compounds, showing fluorescence, in a pure form or chemically immobilised on a spherical polymer matrix. Fluorescent markers are dispersed in the whole volume of coating material. Diameter of monodispersive polymer microspheres is in the range of 0.1-20 µm, preferably in the range of 1-3 µm, the most preferably 2 µm. Fluorescent markers show fluorescence in the range of 300-700 nm, preferably they show fluorescence at wavelengths above 500 nm, after being irradiated with ultraviolet radiation of a wavelength in the range of 250 - 650 nm. The concentration of fluorescent markers is 0.001-1% preferably 0.01-0.1% of the whole volume of coating material.. Chemical compounds showing fluorescence are chosen among chemical compounds, such as 1,8-naphtalimide, acenaphthene, anthracene, benzimidazole, benzoxasole, benzoxazine, benzothiadiazole, benzothiazole, quinazoline, quinoline, dansyl, diazobenzene, diphenylanthracene, dicarboximide, phenanthrene, phenanthroline, phenanthridine, phenoxazine, phenylethynyl, phenylimidazole, flavone, fluorene, naphthalene, oxadiazole, pyrazoline, spiropyran, stilbene, thiadiazole, thiazole derivatives, preferably diallyl-fluorescein (I), allyl-rhodamine B (II), 4'-allyloxy-3-hydroxyflavone (III), 2,5-bis(5-tert-butyl-benzoxazol-2-yl)thiophene (IV), tert-butyl-pyrene (V) or fluorescein (VI). The said fluorescent markers are chemically immobilised on a spherical polymer matrix. Diameter of such spherical polymer matrix is 0.1 - 20 µm, preferably 1-3 µm, the most preferably 2 µm. Next, immobilised markers are dispersed in another polymer base, where the base of the coating material according to the invention is lacquer, silicone or aqueous dispersion of resins, preferably acrylic and alkyd ones. The base of the coating material contains a material selected from a group including ethyl acetate, 2-(2-butoxyethanol), 2-butanone and their mixtures. The coating material is colourless and transparent, so it is not visible during normal use..

A method for marking plastics, consisting of the use of fluorescent markers, according to the invention, is characterized in that the coating material for marking plastics, specified above, is used. For marking, different types of coating material, containing different types of fluorescent markers or coating material containing different combinations of fluorescent markers, are used. The layer of the coating material is applied at a full coverage of surface or in a form of a printing raster with spot size not smaller than 10 µm. The applied layer of the coating material contains an identification code written in the composition of the coating material or in the way it is printed. Sequential layers of coating materials, containing different combinations of fluorescent markers, are printed, while the geometric pattern of each layer may be different. The coating material for marking plastics is applied on the surface of marked plastic during the step of its production, and then the marked material undergoes further technological processes.

A method of identification of marked plastics, using photoluminescence of tested material containing chemical compounds showing fluorescence, is characterized in that the tested material (which is the coating material specified above) is irradiated with an appropriate wavelength in a range of 250 - 650 nm, which excites fluorescent markers present in the coating material covering the material surface; after that, an analysis of photoluminescence radiation is performed in order to read the code present in the composition of the coating material or in the way it is printed. Photoluminescence of excited by UV radiation fluorescent markers have wavelength in a range 300 - 700 nm. Reading of the code is performed by fluorimetric analysis of photoluminescence radiation of the coating material, in order to determine a characteristic spectrum of radiation emitted by a combination of fluorescent markers contained in the coating material on the surface of plastic. Alternatively, reading of the code is performed by a digital analysis of photoluminescence image in order to identify the geometric pattern printed with the coating material on the surface of plastic.

The use of printed graphic or text patterns with at least two coating materials containing different fluorescent markers allows for creation of a practically unlimited number of individual identification codes.

The coating material for marking plastics, the method for marking plastics, the method for identification of marked plastics and their application in sorting plastic waste are described below in detail with execution examples, with reference to the figure attached, where:
- Fig. 1: shows an outline chart for the creation of a coating material according to the invention for marking plastics;
- Fig. 2: shows an outline chart for the method, according to the invention, of marking plastics using the above mentioned coating materials;
- Fig. 3: shows an outline chart for the method, according to the invention, of identifying plastics thanks to the use of appropriate above mentioned coating materials;
- Fig. 4: shows an outline chart for the method, according to the invention, for sorting plastic waste, using the above mentioned coating materials according to the invention;

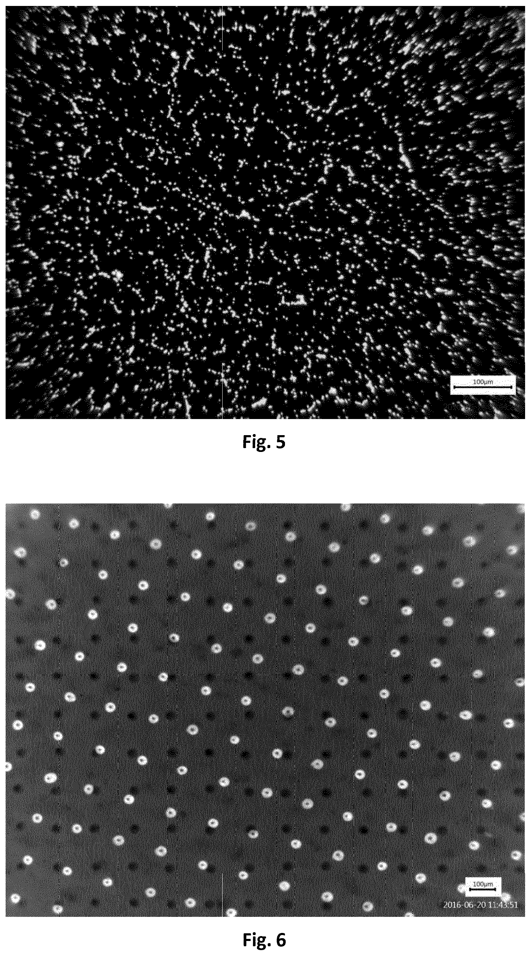

- Fig. 5: shows the surface of a black APET film, printed with a coating material prepared according to the example 8, containing a lacquer, OptilackTF04, as a base for the coating material, and fluorescent markers: diallyl-fluorescein **(I),** allyl-rhodamine B **(II)** and 4'-allyloxy-3-hydroxyflavone **(III).** The photo is made with the use of an optical microscope with epifluorescence attachment, using B filter (exc. 460-490 nm, trans. 520 nm), a x100 objective was used.
- Fig. 6: shows the surface of a transparent APET film, printed with a coating material prepared according to the example 9, containing a lacquer, OptilackTF04, as a base for the coating material, and fluorescent markers: 2,5-bis(5-*tert*-butyl-benzoxazol-2-yl)thiophene **(IV),** *tert*-butyl-pyrene **(V)** and fluorescein **(VI).** The photo is made with the use of an optical microscope with epifluorescence attachment, using UV filter (exc. 320-380 nm, trans. 420 nm), a x40 objective was used.

### Detailed description of the invention

The present invention allows for development and implementation of an efficient, complete recycling system for various types of plastics, regardless of their type and chemical composition, including recycling of multi-layer plastics that are at present recycled only to a minimum extent.

The technology according to the present invention aims to allow for sorting multi-layer materials into appropriate clean streams of various types of plastics, suitable for later reprocessing. The solution according to the invention is complementary with solutions, used at present on the market, for separating individual layers of multi-layer material, as for example: technology of separation of the PET layer from the PE layer (http://www.sulayr-gs.es/) and technology of separation of PVC from polyesters or polyolefins (http://www.vinyloop.com/en/).

The technology according to the present invention ensures a method possible for use in treatment of plastics of various types and intended for various applications. The marking agents used are not toxic and do not change the properties of plastic materials. The application of the technology according to the invention on external layers of a barrier material allows for its use for marking packages intended for food contact.

**The coating material for marking plastics** according to the invention contains a base of the coating material and selected fluorescent markers in the form of appropriately chosen organic fluorescent markers, solved or dispersed in the whole volume of the base of the coating material or introduced into the base of the coating material in the form of appropriately chosen organic fluorescent markers, immobilised chemically on a spherical polymer matrix with a diameter smaller than 2 µm (described in patent application P.414596). Fluorescent markers are dispersed and homogenized in an appropriately selected, colourless material, being the base of the coating material, forming the coating material for marking plastics.

The marking capacity of the coating material according to the invention is obtained by the use of various types of fluorescent markers. The plastic may be marked with a single coating material based on one fluorescent marker or a combination of coating materials, where each of them contains another type of fluorescent marker. Each used qualitative combination of fluorescent markers, introduced into the coating material, or each used qualitative combination of coating materials containing different fluorescent markers can constitute a separate variant of code marking a particular type of plastic or type of multi-layer material. The potential number of fluorescent markers is theoretically unlimited and if using combinations of n fluorescent markers in a coating material or using a combination of n coating materials containing different fluorescent markers, it is possible to obtain x = 2ⁿ - 1 variants of code. For example, if using 3 fluorescent markers in a coating material or using 3 coating materials containing 3 different fluorescent markers (A, B, C) it is possible to develop 7 qualitatively different markings, differing by code (A, B, C, AB, AC, BC, ABC).

Fluorescent markers used to produce the coating material according to the invention contain fluorescent markers, i.e. molecules of organic compounds showing fluorescence in the range of 300-700 nm, which preferably show fluorescence at a wavelength above 500 nm. Fluorescent markers do not change the colour characteristics of marked material, so that they can be used for marking materials for different applications. According to the invention, as fluorescent markers (in a pure form or deposited on polymer microspheres), 1,8-naphtalimide, acenaphthene, anthracene, benzimidazole, benzoxasole, benzoxazine, benzothiadiazole, benzothiazole, quinazoline, quinoline, dansyl, diazobenzene, diphenylanthracene, dicarboximide, phenanthrene, phenanthroline, phenanthridine, phenoxazine, phenylethynyl, phenylimidazole, flavone, fluorene, naphthalene, oxadiazole, pyrazoline, spiropyran, stilbene, thiadiazole, thiazole derivatives, preferably diallyl-fluorescein (I), allyl-rhodamine B (II), 4'-allyloxy-3-hydroxyflavone (III), 2,5-bis(5-tert-butyl-benzoxazol-2-yl)thiophene (IV), tert-butyl-pyrene (V) or fluorescein (VI) are used.

Fluorescent markers feature a high yield of electromagnetic emission, which allows for their detection at a concentration below 1 ppm in the marked material.

Fluorescent markers can be present in the coating material in a solved or dispersed form and also in a form immobilised in spherical polymer matrix with a diameter below 2 µm, according to the method described in patent application P.414596, where the fluorescent marker is permanently, chemically incorporated into a polymer matrix and evenly distributed within it, and fluorescent markers as such contain chemical groups that allow for their copolymerisation with the material of polymer matrix. Immobilisation of fluorescent markers in a polymer matrix is permanent, therefore they are not released and they do not migrate into the marked material. The content of a fluorescent marker relative to the material of polymer matrix is below 1.0% w/w. In this case, fluorescent markers stay permanently dispersed in the coating material and they do not migrate within the material.

The polymer matrix for immobilisation of fluorescent markers consists of polymer microspheres with a well-defined spherical shape and a diameter in the range of 0,1-20 µm. Optimally, the size of polymer microspheres is 2 µm. Polymer microspheres can be obtained with a method described in patent application P.414596.

The base of the coating material can be both lacquer and appropriately chosen silicone. The base of the coating material can be an aqueous dispersion of appropriate resins (e.g. acrylic, alkyd, silicones) or it can contain ethyl acetate, 2-(2-butoxyethanol), 2-butanone and their mixtures. Appropriate choice of the base of the coating material ensures its compatibility with the fluorescent marker and durability of the lacquer for marking plastics. The base of the coating material is also selected for ensuring an appropriate adhesion of the coating material to the marked plastic material.

The coating material according to the invention, containing fluorescent markers, is colourless and transparent after applying the coating on the marked material, due to the use of a low concentration of fluorescent markers or the fact that they are incorporated into a polymer matrix of micrometre size. Optimum concentration of fluorescent markers in the coating material according to the invention is 0.01-0.1% w/w.

The coating material according to the invention shows absorption of waves in the range of 250-650 nm and fluorescence in the range of 300-700 nm; preferably it shows fluorescence with a wavelength above 500 nm. Due to the use of appropriately selected fluorescent markers there is no problem of overlapping the emission signal of fluorescent markers with the emission signals of potential additives for plastics, such as optical brighteners or UV stabilizers.

The coating material according to the invention is thermally stable up to 220 °C, which allows for thermal treatment of plastics covered with the coating material. The coating material according to the invention shows high photostability, allowing exposition to UV-VIS radiation. Moreover, the coating material according to the invention does not affect the physicochemical characteristic of the marked material and it is stable in operational conditions of the material during the full useful life of the material.

The coating material according to the invention is non-toxic and insoluble in water. It is possible to use the coating material according to the invention for marking plastics used as packaging material, including those intended for food contact.

The coating material shows adhesion to the marked plastic and it is possible to remove it from its surface with available recycling methods or it is soluble in appropriately chosen washing agents, organic solvents or their mixtures, allowing for its selective removal from plastics before their reprocessing, without a risk of contamination of the obtained secondary raw material.

Alternatively, the coating material shows adhesion to the marked plastic and it is irremovable from its surface while physicochemical properties of this plastic are maintained.

**A method for marking plastics** according to the invention is realized by applying the coating material for marking plastics, containing an appropriate composition of fluorescent markers, dispersed and homogenized in the base of the coating material or by applying multiple coating materials, containing different fluorescent markers. The composition of the coating material used or the combination of different coating materials constitutes an arbitrary code, corresponding to particular classes of plastics. It is possible to identify a material marked using the method according to the invention during waste sorting, while sorting whole packages as well as flakes. After the waste sorting is finished, the coating material is washed with appropriately chosen washing agents, organic solvents or their mixtures.

It is possible to use, for marking plastics, a coating material with different qualitative composition of fluorescent markers or use different coating materials containing different fluorescent markers. Each combination of markers in a coating material or a combination of coating materials for marking plastics constitutes a separate version of the code and can be used for marking a different material during its production. The potential number of fluorescent markers is theoretically unlimited and if using combinations of n fluorescent markers in a coating material or using a combination of n coating materials containing different fluorescent markers it is possible to obtain x = 2ⁿ - 1 variants of code. For example, if using 3 fluorescent markers in a coating material or using 3 coating materials containing 3 different fluorescent markers (A, B, C) it is possible to develop 7 qualitatively different markings, differing by code (A, B, C, AB, AC, BC, ABC).

Alternatively, it is possible to use for marking several coating materials with different combinations of fluorescent markers in order to create geometrical patterns observable after excitation with appropriately chosen irradiation. A single layer or a set of multiple layers of coating materials can contain different patterns with encoded information. The information concerning the identification of marked material can be encoded with geometrical symbols (for example, a pattern of a coating material with A marker forms circles, a pattern with B marker forms crosses, a pattern with C marker forms triangles) and/or written with text and/or present in a barcode or a QR code. The potential number of combinations of geometrical symbols, text information and barcodes or QR codes is infinite.

The method for marking according to the invention consists of covering the marked plastic with a layer of the coating material, containing an appropriate combination of fluorescent markers, or covering it with a layer of different coating materials, containing different fluorescent markers, according to the adopted arbitrary marking system. The coating material is applied on the surface of marked material during the step of its production, and then the marked material undergoes further technological processes. Alternatively, a layer of the coating material can be applied to the surface of a finished product made of plastic.

The application of a layer of a coating material or combination of coating materials for marking plastics on the marked material is realized by means of flexography printing, rotogravure printing, offset printing, letterset, pad printing, intaglio, planographic printing, letterpress printing, screen printing, digital printing, spraying (aerography) and any other printing method or coating method. Spraying, screen printing and pad printing allow for the application of coating materials also on a finished product made of multi-layer material, for example on a packaging. Coating material(s) can be applied on the whole surface of the marked plastic or on its fragment, and the layers of coating materials can be homogenous (full transfer) or form patterns on the surface of plastic, as a printing raster. The method for marking according to the invention assumes an application of a layer of coating material with an appropriate thickness, in the range of 1-5 µm, preferably 2 µm.

One of the most important factors in selecting an appropriate base for the coating material for marking plastics is its adequate adhesion to the marked material. The coating material cannot affect physicochemical properties of the coated plastic, such as durability, colour and aspect. The coating material must be stable in the conditions for processing the plastic and for its later exploitation; also, it should not affect the quality and properties of the marker and its detectability.

The coating material for marking plastics is removed from the surface of marked material during the recycling, after the sorting process, with an appropriate washing mixture. The removal of markers after sorting allows for the removal of contaminations from the material intended for recycling and, next, it allows for further processing of mono- and multi-component materials. The washing is performed in recycling lines or washing lines in waste sorting plants or waste processing plants.

The removal of the coating material from the surface of plastics is a necessary step during the recycling of plastics, due to the need of processing pure raw materials. The washing mixtures used must completely dissolve the coating material without compromising the plastic. It is possible to develop multiple washing mixtures with required properties. Example compositions of washing agents are described in the execution examples below, which does not exclude a possibility to use other, not described washing agents and mixtures in the solution according to the invention.

**A method for identification of marked plastics** according to the invention, it consists of fluorimetry test of plastic waste, marked according to the invention; this test allows for reading the information encoded with the composition of the coating material or with the type of coating materials used for marking plastics, according to the adopted arbitrary marking system.

For marking plastics and multi-layer and multi-component plastic materials, coating materials with different qualitative composition of fluorescent markers or sets of different coating materials containing different fluorescent markers are used. Each combination of markers in a coating material or a combination of coating materials for marking plastics constitutes a separate version of the code and can be used for marking a different material during its production. The potential number of fluorescent markers is theoretically unlimited and if using combinations of n fluorescent markers in a coating material or using a combination of n coating materials containing different fluorescent markers it is possible to obtain x = 2ⁿ - 1 variants of code. For example, if using 3 fluorescent markers in a coating material or using 3 coating materials containing 3 different fluorescent markers (A, B, C) it is possible to develop 7 qualitatively different markings, differing by code (A, B, C, AB, AC, BC, ABC).

Alternatively, the information concerning the identification of marked material can be encoded with geometrical symbols and/or written with text and/or present in a barcode or a QR code. The potential number of combinations of geometrical symbols, text information and barcodes or QR codes is infinite.

The method for identification according to the invention requires developing and adopting a consistent marking system by plastic producers. The standardisation of marking and identification will allow for an efficient recovery of secondary raw materials and will contribute to the reduction of material consumption and energy consumption in plastic industry and to the reduction of greenhouse gases emission into the atmosphere.

The method for identification according to the invention is performed in an on-line mode with a special detector and consists of fluorimetric analysis of a stream of pre-sorted plastic waste; it allows to read the code present in the composition of the coating material or in the selection of different coating materials.

Alternatively, the method for identification according to the invention is performed in an on-line mode, with a detector reading graphical information visible after irradiation of a stream of pre-sorted plastic waste. The information written as a set of geometrical symbols (for example, a pattern of a coating material with A marker forms circles, a pattern with B marker forms crosses, a pattern with C marker forms triangles) can be read with the use of digital image analysis. Graphical information in the form of a text printed with the coating material can be read with the use of an optical system for optical character recognition (OCT) and it can contain a direct information about the type of marked material. Similarly, the information in the form of a barcode or a QR code printed with the coating material can contain a direct information about the type of marked material.

Then, the identified stream of waste is sorted, according to the results of the analysis performed, into streams of waste containing mono- and multi-component plastics of one type. After obtaining the clean streams of one-type plastic - also in the form of multi-layer materials - it is possible to process them with an adequate recovery method, appropriately chosen to match the type and design of a particular plastic.

When the step of identification and sorting of plastics is finished, the coating material according to the invention for marking plastics is washed using an appropriately chosen washing agent. The waste stream without the layer of coating material can be then processed in further recovery steps without a risk of contamination of raw material, which could have been a cause of future mistakes in successive processes of sorting and recovery of secondary raw materials.

The detector for identification of marked plastics ensures the determination of qualitative composition of the coating material or identification of different coating materials, covering the surface of plastic, on the basis of their fluorimetric analysis. The detector should contain an epifluorescence optical system with appropriate magnification and it should be equipped with a set of optical filters and CCD matrix. It should also have specialist software for identification of variants of the code based on fluorescent markers.

The coating material for marking of plastics, the method for marking of plastics and the method for identification of marked plastics are described below in execution examples and in tables.

**Example 1.** 3 specific fluorescent markers were developed, in the form of fluorescent markers chemically immobilised on a spherical, composite polymer matrix, intended for dispersion of the coating material for marking plastics within the base. As fluorescent markers, diallyl-fluorescein **(I),** allyl-rhodamine B **(III)** and 4'-allyloxy-3-hydroxyflavone **(III)** were used. As the polymer matrix, monodispersive composite polymer microspheres, poly(styreneacrylonitrile), were used, with diameters of 1.5-1.9 µm, obtained according to a method described in patent application P.414596. The chemical immobilisation of each fluorescent marker in the polymer matrix was performed according to a method described in patent application P.414596.

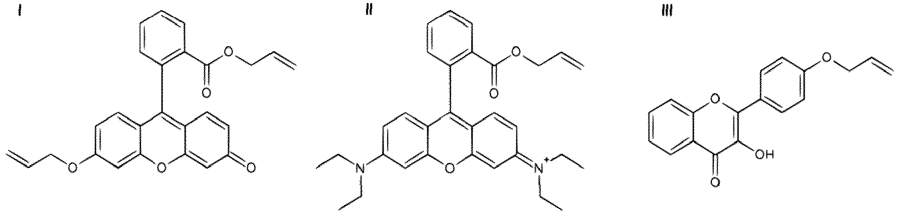

**Example 2.** 3 fluorescent markers were prepared, in the form of chemical compounds intended to be dissolved in a base of a coating material for marking plastics. As fluorescent markers, 2,5-bis(5-*tert*-butyl-benzoxazol-2-yl)thiophene **(IV),** *tert*-butyl-pyrene **(V)** and fluorescein **(VI)** were chosen.

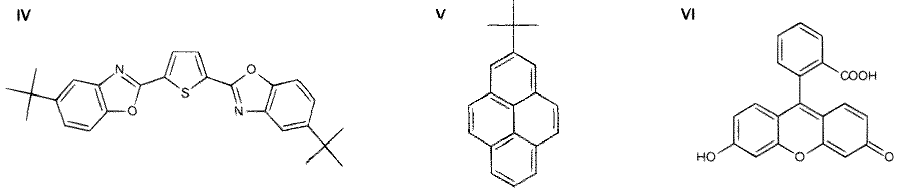

**Example 3.** Different types of bases of coating materials were examined and tested, for their adhesion capacity on different types of plastic. As bases for coating materials, two-component, chemically cured colourless lacquers: Gecko (lacquer 224358 + hardener 132871), Rotoester (lacquer 271848 + hardener 140235), Chespa (lacquer 2K Gloss R2 + hardener B-20) and colourless single-component lacquers: Top Coat HR (WP 71077F) and Top Coat SPL (WP 21110F) were used. Trials of application of the bases of the coating materials onto multi-layer PET and PVC films were conducted. In most cases the obtained coatings were permanent and insoluble in water. The results are shown in Table 1. A simulation of solar light exposition, performed in an ageing chamber, confirmed a high photostability of the obtained coatings.

**Table 1. Stability of the bases of the coating material on multi-layer PET and PVC films.**

| **base of coating material** | **film type** | **adhesion level** | **coating durability** |
|---|---|---|---|
| Gecko (224358 + 132871) | PVC \| PE | high | very durable |
| | APET \| PE | high | very durable |
| Rotoester (271848 + 140235) | PVC \| PE | high | very durable |
| | APET \| PE | high | very durable |
| Chespa (2K Gloss R2 + B-20) | PVC \| PE | high | very durable |
| | APET \| PE | high | very durable |
| Top Coat HR (WP 71077F) | PVC \| PE | low | not durable |
| | APET \| PE | low | not durable |
| Top Coat SPL (WP 21110F) | PVC \| PE | low | not durable |
| | APET \| PE | low | not durable |

**Example 4.** Studies on washability of coats of bases of coating materials from multi-layer PET or PVC foils from example 3 were conducted. The washing solutions used were: an aqueous solution with pH = 13 with 2% addition of a surfactant (A), benzyl alcohol (B), a mixture of benzyl alcohol with water (1:1) with 2% addition of a surfactant (C), N,N-dimethylformamide (D), dimethylsulfoxide (E). The washing trials were conducted in the temperature range of 60-80 °C, with continuous mixing or with the presence of ultrasounds. The results of washability of coats of bases of coating materials are shown in Tables 2-4.

**Table 2. Washability of two-component, chemically cured colourless lacquer Gecko (lacquer 224358 + hardener 132871) from the surface of multi-layer PET or PVC films.**

| **Type of washing bath** | **Washing conditions** | **Film type** | **Washing level [%]** | **Comment** |
|---|---|---|---|---|
| A | 80°C, 15 min, mixing | PVC \| PE | 0 | |
| | | APET \| PE | 0 | |
| | 75 °C, 15 min, ultrasound | PVC \| PE | 0 | |
| | | APET \| PE | 0 | |
| B | 60 °C, 15 min, mixing | PVC \| PE | 100 | |
| | | APET \| PE | 0 | film cloudiness |
| | 60 °C, 15 min, ultrasound | PVC \| PE | 100 | |
| | | APET \| PE | 0 | film cloudiness |
| C | 60 °C, 15 min, mixing | PVC \| PE | 100 | |
| | | APET \| PE | 0 | film cloudiness |
| | 60 °C, 15 min, ultrasound | PVC \| PE | 100 | |
| | | APET \| PE | 0 | film cloudiness |
| D | 60 °C, 15 min, ultrasound | PVC \| PE | 100 | film dissolution |
| | | APET \| PE | 100 | film cloudiness |
| E | 60 °C, 15 min, ultrasound | PVC \| PE | 100 | film swelling |
| | | APET \| PE | 100 | |

**Table 3. Washability of two-component, chemically cured colourless lacquer Rotoester (lacquer 271848 + hardener 140235) from the surface of multi-layer PET or PVC films.**

| **Type of washing bath** | **Washing conditions** | **Film type** | **Washing level [%]** | **Comment** |
|---|---|---|---|---|
| A | 80°C, 15 min, mixing | PVC \| PE | 0 | |
| | | APET \| PE | 0 | |
| | 75 °C, 15 min, ultrasound | PVC \| PE | 0 | |
| | | APET \| PE | 0 | |
| B | 60 °C, 15 min, mixing | PVC \| PE | 0 | |
| | | APET \| PE | 0 | film cloudiness |
| | 60 °C, 15 min, ultrasound | PVC \| PE | 0 | |
| | | APET \| PE | 0 | film cloudiness |
| C | 60 °C, 15 min, mixing | PVC \| PE | 0 | |
| | | APET \| PE | 0 | film cloudiness |
| | 60 °C, 15 min, ultrasound | PVC \| PE | 0 | |
| | | APET \| PE | 0 | film cloudiness |
| D | 60 °C, 15 min, ultrasound | PVC \| PE | 100 | film dissolution |
| | | APET \| PE | 70-90 | film cloudiness |
| E | 60 °C, 15 min, ultrasound | PVC \| PE | 0 | film swelling |
| | | APET \| PE | 0 | |

**Table 4. Washability of two-component, chemically cured colourless lacquer Chespa (lacquer 2K Gloss R2 + hardener B-20) from the surface of multi-layer PET or PVC films.**

| **Type of washing bath** | **Washing conditions** | **Film type** | **Washing level [%]** | **Comment** |
|---|---|---|---|---|
| A | 80°C, 15 min, mixing | PVC \| PE | 0 | |
| | | APET \| PE | 0 | |
| | 75 °C, 15 min, ultrasound | PVC \| PE | 0 | |
| | | APET \| PE | 0 | |
| B | 60 °C, 15 min, mixing | PVC \| PE | 100 | |
| | | APET \| PE | 0 | film cloudiness |
| | 60 °C, 15 min, ultrasound | PVC \| PE | 100 | |
| | | APET \| PE | 0 | film cloudiness |
| C | 60 °C, 15 min, mixing | PVC \| PE | 0 | |
| | | APET \| PE | 0 | film cloudiness |
| | 60 °C, 15 min, ultrasound | PVC \| PE | 0 | |
| | | APET \| PE | 0 | film cloudiness |
| D | 60 °C, 15 min, ultrasound | PVC \| PE | 100 | film dissolution |
| | | APET \| PE | 60-80 | film cloudiness |
| E | 60 °C, 15 min, ultrasound | PVC \| PE | 100 | film swelling |
| | | APET \| PE | 0 | |

**Example 5.** Different types of bases of coating materials were examined and tested, for their adhesion capacity on different types of plastic. As bases for coating materials, single-component, colourless lacquers: Optilack TF03, Optilack TF04, Optilack TF05 and two-component colourless lacquers: GlossVarnishl40170, DilventVarnish 390938 were tested. Trials of application of bases of coating materials onto APET and PVC films were conducted. The obtained coatings were durable and insoluble in water. The results are shown in Table 5. A simulation of solar light exposition, performed in an ageing chamber, confirmed a high photostability of the obtained coatings.

**Table 5. Stability of bases of coating materials on multi-layer APET and PVC films.**

| **base of coating material** | **film type** | **adhesion level** | **coating durability** |
|---|---|---|---|
| Optilack TF03 | APET | high | very durable |
| Optilack TF04 | APET | high | very durable |
| Optilack TF05 | PVC | high | very durable |
| Gloss Varnish 140170 | APET | high | very durable |
| Dilvent Varnish 390938 | APET | high | very durable |

**Example 6.** Studies on washability of applied coats of bases of coating materials from multi-layer APET or PVC foils from example 5 were conducted. The washing solutions used were: an aqueous solution with pH = 13 with 2% addition of a surfactant (F) and ethyl acetate (G). The washing trials were conducted at 70 °C, with the presence of ultrasounds. The time for the washing bath was 10 min. The results of washability of coats of bases of coating materials are shown in Table 6.

**Table 6. The washability of colourless lacquers: Optilack TF03, Optilack TF04, Optilack TF05, GlossVarnish 140170, DilventVarnish 390938 from the surface of multi-layer APET or PVC films.**

| **Base of coating material** | **Film type** | **Type of washing bath** | **Washing level [%]** | **Comment** |
|---|---|---|---|---|
| Optilack TF03 | APET | F | 0 | |
| | | G | 0 | |
| Optilack TF04 | APET | F | 0 | |
| | | G | 100 | |
| Optilack TF05 | PVC | F | 0 | |
| | | G | 100 | film dissolution |
| Gloss Varnish 140170 | APET | F | 0 | |
| | | G | 0 | |
| Dilvent Varnish 390938 | APET | F | 0 | |
| | | G | 0 | |

**Example 7.** Trials of thermoforming of APET and PVC films with applied coats of bases of the coating materials from example 5 were conducted. The bases of the coating materials were applied on films by flexography (transfer: 6.0 cm³/m²). The thermoforming process was conducted at continuous heating. For thermoforming, a vacuum former 725FLB (CR Clarke) was used; mould depth: 5 mm, 50 mm and 100 mm, heating time 10-30 s. The results of the conducted studies are illustrated in Table 7. Satisfactory results were obtained, in most cases without observing a damage of lacquer layer or plastic, and with satisfactory separation of thermoformed objects from the form.

**Table 7.Thermoforming of APET and PVC films covered with a layer of colourless lacquers: Optilack TF03, Optilack TF04, Optilack TF05, GlossVarnish 140170, DilventVarnish 390938.**

| **Base of coating material** | **Film type** | **Thermoforming result** | **Comment** |
|---|---|---|---|
| Optilack TF03 | APET | positive | |
| Optilack TF04 | APET | positive | |
| Optilack TF05 | PVC | positive | |
| Gloss Varnish 140170 | APET | positive | lacquer adheres to the |
| Dilvent Varnish 390938 | APET | negative | cracks are created |

**Example 8.** Using fluorescent markers prepared as in example 1 and a base of a coating material: Optilack TF04, a series of coating materials for marking plastic with different qualitative composition was prepared. Concentrations of fluorescent markers in the coating material in the range of 0.001-1.0% were used. On the basis of three types of fluorescent markers (I, II, III), 7 variants of coating material for marking plastics were developed, differing with code (I, II, III, I-II, I-III, II-III, I-II-III). The obtained coating materials were colourless and transparent. During spectroscopy studies, a high quantum yield of the obtained coating materials was found. The studies on ageing confirmed photostability of the prepared coating materials during exposition to UV-VIS irradiation.

**Example 9.** Using fluorescent markers prepared as in example 2 and a base of a coating material Optilack TF04, a series of coating materials for marking plastic was prepared. Concentrations of fluorescent markers in the coating material in the range of 0.001-1.0% were used. Basing on three types of fluorescent markers (IV, V, VI), 7 variants of coating material for marking plastics were developed, differing with code (IV, V, VI, IV-V, IV-VI, V-VI, IV-V-VI). The obtained coating materials were colourless and transparent. During spectroscopy studies, a high quantum yield of the obtained coating materials was found. The studies on ageing confirmed photostability of the prepared coating materials during exposition to UV-VIS irradiation.

**Example 10.** Using fluorescent markers prepared as in example 1 and a base of a coating material - multi-component silicone: Silicoleaseemulsion 907 + Silicoleaseemulsion CATA 903 + Silicoleaseemulsion XL 969 + Silicolease ADD 702 (Bluestarsilicone, France), a series of coating materials for marking plastics, with different qualitative composition, was prepared. Concentrations of fluorescent markers in the coating material in the range of 0.001-1.0% were used. On the basis of three types of fluorescent markers (I, II, III), 7 variants of coating material for marking plastics were developed, differing with code (I, II, III, I-II, I-III, II-III, I-II-III). The obtained coating materials were colourless and transparent. During spectroscopy studies, a high quantum yield of the obtained coating materials was found. The studies on ageing confirmed photostability of the prepared coating materials during exposition to UV-VIS irradiation.

**Example 11.** Tests of application of the coating materials, prepared as in examples 8, 9 and 10, on surfaces of APET film, were performed, in order to optimize the thickness of the applied coating and to select an appropriate, minimum concentration of fluorescent markers in the layer of the coating material that assures their correct detection. Concentrations of fluorescent markers in the coating material in the range of 0.001-1.0% were studied. The application layers were applied by flexography, for lacquers, or by coating, for silicones; the layers obtained were 1-10 µm thick. The optimum concentration of markers in the coating material was determined as 0.01-0.1% w/w, and the optimum thickness of application layer of the coating material was determined as 2 µm, which, in the case of fluorescent markers from example 1, gives the minimum layer thickness corresponding to the diameter of polymer microspheres, constituting the matrix for a marker. The obtained coatings were colourless and transparent. Also, no influence of the coating material on physicochemical characteristics of the marked material was found. After testing the plastics, after removing the coating layer, no migration of markers into the inside of material was found.

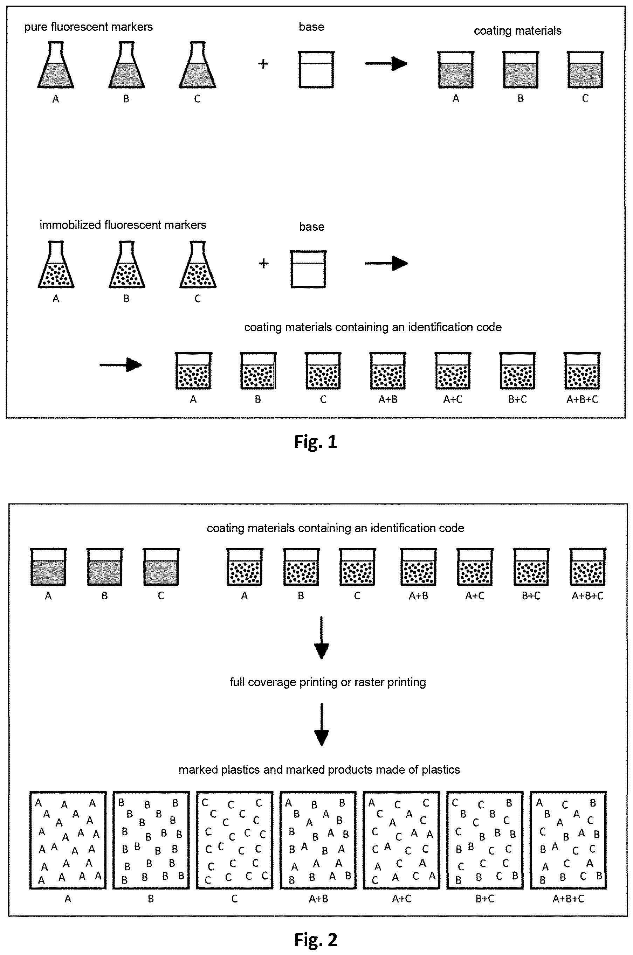

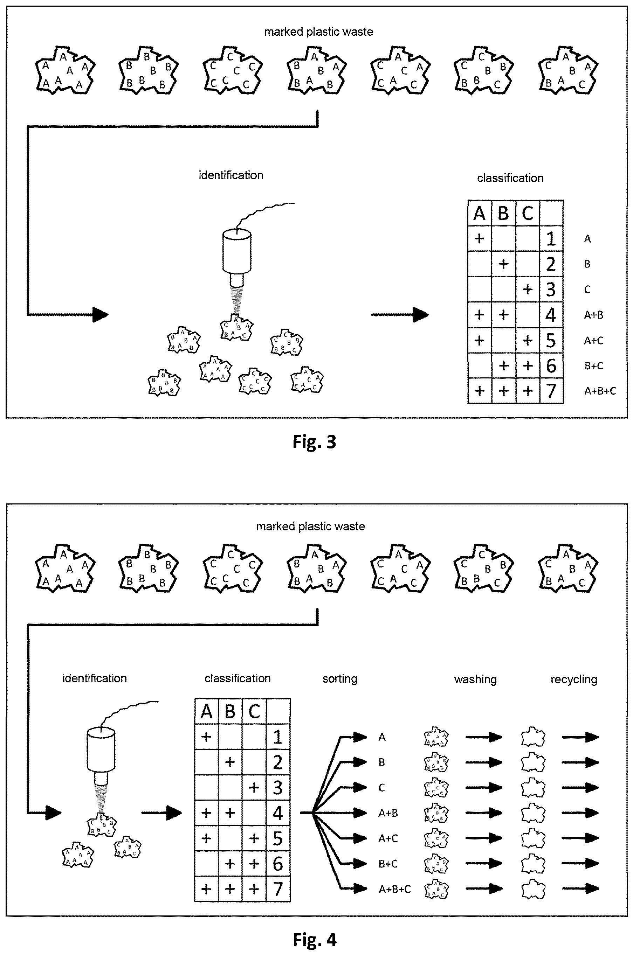

**Example 12.** The coating materials, prepared as in examples 8 and 9, were applied on APET films. The coating materials were applied by flexography. For the coating materials from example 8, a transfer of the coating material on the surface of marked plastic was used, in the amount of 3.5 cm³/m², and the thickness of the layer of the coating material was 2 µm. For the coating materials described in example 9, flexographic printing of the coating material was used, in the form of a raster with 50 l/cm resolution and 3% coverage, where point diameter was 40 µm, and distance between points was 150 µm. The layout of fluorescent markers and coating materials was studied with an optical microscope with epifluorescence set, equipped with optical UV filters (exc. 320-380 nm, trans. 420 nm), V (exc. 390-410 nm, trans. 455 nm), B (exc. 460-490 nm, trans. 520 nm), G (exc. 510-550 nm, trans. 590 nm) and a mercury lamp as an excitation source. Satisfying results were obtained for coating materials that contained fluorescent markers from both example 1 (Fig. 2) and example 2 (Fig. 3).

**Example 13.** The coating materials, prepared as in example 9, were applied on APET films. Three coating materials, with different composition of fluorescent markers (IV, V, VI) were used. The coating materials were applied by flexography, by printing a set of geometrical shapes: circles were printed with the coating material containing marker IV, crosses were printed with the coating material containing marker V, and triangles were printed with the coating material containing marker VI. The graphical information printed with coating materials was studied with a digital camera with epifluorescence set, equipped with optical UV filters (exc. 320-380 nm, trans. 420 nm), V (exc. 390-410 nm, trans. 455 nm), B (exc. 460-490 nm, trans. 520 nm), G (exc. 510-550 nm, trans. 590 nm) and a mercury lamp as an excitation source. The graphical information was read.

**Example 14.** The coating material, prepared as in example 9, was applied on APET films. A coating material containing fluorescent marker (IV) was used. The coating material was applied by flexography, by printing a letter designation of marker IV. The graphical information printed with coating material was studied with a digital camera with epifluorescence set, equipped with optical UV filters (exc. 320-380 nm, trans. 420 nm), V (exc. 390-410 nm, trans. 455 nm), B (exc. 460-490 nm, trans. 520 nm), G (exc. 510-550 nm, trans. 590 nm) and a mercury lamp as an excitation source. The graphical information written in the form of a text was read.

**Example 15.** The coating material, prepared as in example 9, was applied on APET films. A coating material containing fluorescent marker (V) was used. The coating material was applied by flexography, by printing a barcode containing a designation of marker V. The graphical information printed with coating material was studied with a digital camera with epifluorescence set, equipped with optical UV filters (exc. 320-380 nm, trans. 420 nm), V (exc. 390-410 nm, trans. 455 nm), B (exc. 460-490 nm, trans. 520 nm), G (exc. 510-550 nm, trans. 590 nm) and a mercury lamp as an excitation source. The information written in the form of a barcode was read.

**Example 16.** Studies related to detection of fluorescent markers, applied on PET films in industrial conditions, were performed. Tests were conducted on films covered with the coating materials prepared according to examples 8 and 9, in different combinations. For detection, an epifluorescence optical system with an appropriate magnification was used, together with a set of optical filters and a CCD matrix or camera with specialist software for identification of variants of the code based on fluorescent markers. The tests were performed off-line, the samples were immobile in relation to the measuring head and the tests were successful.

**Example 17.** Marked PET films, obtained as in example 12, were thermoformed (vacuum former 725FLB CR Clarke, mould depth: 5 mm, 50 mm and 100 mm, heating time 10-30 s) with satisfying results and without observing a damage of lacquer layer. Next, detection of fluorescent markers was performed on thermoformed films. In the test, a detector as in example 13, in off-line mode, was used. The tests were successful - each material was characterized by a different signal, which was acquired and identified by the detector.

**Example 18.** Multi-layer PET and PVC films, marked and thermoformed (vacuum former 725FLB CR Clarke, mould depth: 5 mm, 50 mm and 100 mm, heating time 10-30 s) as in example 14, were tested for washability of the coating material. Films from mouldings after thermoforming were cut and washed in washing bath solutions, as in example 6. The layer of the coating material together with fluorescent markers was completely washed off. The results of tests were confirmed by spectroscopy.

## Claims

1. A transparent colourless coating material for marking plastics containing a base and 0.001-1% w/w of fluorescent markers, wherein the fluorescent markers have a form of organic chemical compounds showing fluorescence and being chemically immobilised on a spherical polymer matrix with a diameter range 0.1-20 µm, preferably in the range of 1-3 µm, the most preferably 2 µm, dispersed in the whole volume of coating material, and wherein the chemical compounds are selected from the list of compounds consisting of: 1,8-naphtalimide, acenaphthene, anthracene, benzimidazole, benzoxasole, benzoxazine, benzothiadiazole, benzothiazole, quinazoline, quinoline, dansyl, diazobenzene, diphenylanthracene, dicarboximide, phenanthrene, phenanthroline, phenanthridine, phenoxazine, phenylethynyl, phenylimidazole, flavone, fluorene, naphthalene, oxadiazole, pyrazoline, spiropyran, stilbene, thiadiazole, thiazole derivatives, preferably diallyl-fluorescein (I), allyl-rhodamine B (II), 4'-allyloxy-3-hydroxyflavone (III), 2,5-bis(5-tert-butyl-benzoxazol-2-yl)thiophene (IV), tert-butyl-pyrene (V) or fluorescein (VI), and wherein the base of the coating material is lacquer, silicone or aqueous dispersion of resins, preferably acrylic and alkyd ones, and wherein the coating material forming an identification code revealing itself in the form of fluorescent radiation after irradiation of the coating material with radiation with 250-650 nm wavelength.

2. A method for marking plastics, consisting of covering internal or external surface of plastics with a surface coating containing a fluorescent substance, that envisages a full coverage of the marked surface or printing the code in a numerical, alphanumerical or geometrical form, preferably in a barcode form; this marking can be read after irradiating the marked plastic with ultraviolet radiation by tracking its fluorescence emission in visible light by a detector, preferably with a CCD camera, **characterized in that** a coating material for marking plastic, specified in claim 1 is used, while a layer of coating material is applied with a thickness of 1-5 µm, preferably 2 µm, preferably in the form of printing raster with spot size not smaller than 10 µm and the applied coating layer contains an arbitrary, previously established identification code realized through the composition of fluorescent markers contained in the coating material, which has a particular corresponding signal of CCD digital detector.

3. A method for identification of marked plastic using the effect of photoluminescence of coating material containing a fluorescent substance, engaging a source of ultraviolet radiation and optical detector, preferably a CCD camera, tracking fluorescent emission of coating material in visible light, allowing for reading the code in numerical, alphanumerical or geometrical form **characterized in that** the plastic marked with the coating material specified in claim 1 applied on the plastic in a form of printing raster with spot size not smaller than 10 µm, with the layer having thickness of 1-5 µm, preferably 2 µm, is irradiated with radiation of wavelength 250 - 650 nm and then fluorescence in the range of 300-700 nm, preferably in the range above 500 nm, of the coating material is analysed in order to read identification printed code or to determine the characteristic radiation emitted by the combination of fluorescent markers contained in coating material on the surface of plastic.

## Patentansprüche

1. Transparentes farbloses Beschichtungsmaterial zum Markieren von Kunststoffen, das eine Basis und 0,001-1 Gew.-% fluoreszierende Marker enthält, wobei die fluoreszierenden Marker die Form von organischen chemischen Verbindungen aufweisen, die Fluoreszenz zeigen und chemisch auf einer kugelförmigen Polymermatrix mit einem Durchmesserbereich von 0,1-20 µm, vorzugsweise im Bereich von 1-3 µm, am meisten bevorzugt 2 µm immobilisiert sind, die im gesamten Volumen des Beschichtungsmaterials dispergiert ist, und wobei die chemischen Verbindungen aus der Liste von Verbindungen ausgewählt sind, bestehend aus: 1,8-Naphtalimid, Acenaphthen, Anthracen, Benzimidazol, Benzoxasol, Benzoxazin, Benzothiadiazol, Benzothiazol, Chinazolin, Chinolin, Dansyl, Diazobenzol, Diphenylanthracen, Dicarboximid, Phenanthren, Phenanthrolin, Phenanthridin, Phenoxazin, Phenylethinyl, Phenylimidazol, Flavon, Fluoren, Naphthalin, Oxadiazol, Pyrazolin, Spiropyran, Stilben, Thiadiazol, Thiazolderivate, vorzugsweise Diallyl-Fluorescein (I), Allyl-Rhodamin B (II), 4'-Allyloxy-3-hydroxyflavon (III), 2,5-Bis(5-tert-butyl-benzoxazol-2-yl)thiophen (IV), tert-Butyl-pyren (\/) oder Fluorescein (VI), und wobei die Basis des Beschichtungsmaterials Lack, Silikon oder wässrige Dispersion von Harzen, vorzugsweise Acryl- und Alkydharzen, ist, und wobei das Beschichtungsmaterial einen Identifikationscode bildet, der sich nach Bestrahlung des Beschichtungsmaterials mit Strahlung mit 250-650 nm Wellenlänge in Form von Fluoreszenzstrahlung offenbart.

2. Verfahren zum Markieren von Kunststoffen, bestehend aus dem Abdecken der inneren oder äußeren Oberfläche von Kunststoffen mit einer Oberflächenbeschichtung, die eine fluoreszierende Substanz enthält, wobei ein vollständiges Abdecken der markierten Oberfläche oder ein Aufdruck des Codes in numerischer, alphanumerischer oder geometrischer Form, vorzugsweise in Form eines Strichcodes, vorgesehen ist; diese Markierung kann nach Bestrahlung des markierten Kunststoffs mit ultravioletter Strahlung gelesen werden, indem ihre Fluoreszenzemission im sichtbaren Licht durch einen Detektor, vorzugsweise mit einer CCD-Kamera, verfolgt wird, **dadurch gekennzeichnet, dass** ein Beschichtungsmaterial zum Markieren von Kunststoff nach Anspruch 1 verwendet wird, wobei eine Schicht des Beschichtungsmaterials mit einer Dicke von 1-5 µm, vorzugsweise 2 µm, vorzugsweise in Form eines Druckrasters mit einer Punktgröße von nicht kleiner als 10 µm, aufgetragen wird, und die aufgetragene Beschichtungsschicht einen beliebigen, zuvor festgelegten Identifikationscode enthält, der durch die Zusammensetzung von im Beschichtungsmaterial enthaltenen Fluoreszenzmarkern realisiert ist, das ein bestimmtes entsprechendes Signal des CCD-Digitaldetektors aufweist.

3. Verfahren zur Identifizierung von markiertem Kunststoff unter Verwendung der Wirkung von Fotolumineszenz von Beschichtungsmaterial, das eine fluoreszierende Substanz enthält, wobei eine Quelle für ultraviolette Strahlung und ein optischer Detektor, vorzugsweise eine CCD-Kamera, eingesetzt werden, der die Fluoreszenzemission des Beschichtungsmaterials in sichtbarem Licht verfolgt, was das Lesen des Codes in numerischer, alphanumerischer oder geometrischer Form ermöglicht, **dadurch gekennzeichnet, dass** der Kunststoff, der mit dem in Anspruch 1 angegebenen Beschichtungsmaterial markiert ist, das auf den Kunststoff in Form eines Druckrasters mit einer Punktgröße von nicht weniger als 10 µm aufgetragen wird, wobei die Schicht eine Dicke von 1-5 µm, vorzugsweise 2 µm, aufweist, mit einer Strahlung der Wellenlänge 250 - 650 nm bestrahlt wird, und dann die Fluoreszenz im Bereich von 300-700 nm, vorzugsweise im Bereich über 500 nm, des Beschichtungsmaterials analysiert wird, um den aufgedruckten Identifikationscode zu lesen oder die charakteristische Strahlung zu bestimmen, die von der Kombination der im Beschichtungsmaterial enthaltenen fluoreszierenden Marker auf der Oberfläche des Kunststoffs emittiert wird.

## Revendications

1. Matériau de revêtement transparent et incolore pour le marquage de matières plastiques contenant une base et de 0,001 à 1 % m/m de marqueurs fluorescents, les marqueurs fluorescents ayant une forme de composés chimiques organiques présentant une fluorescence et chimiquement immobilisés sur une matrice polymère sphérique ayant un diamètre compris dans la plage allant de 0,1 à 20 µm, de préférence dans la plage allant de 1 à 3 µm, de manière préférée entre toutes de 2 µm, dispersés dans tout le volume du matériau de revêtement, choisi dans la liste de composés constituée par: le 1,8-naphtalimide, l'acénaphtène, l'anthracène, le benzimidazole, le benzoxasole, la benzoxazine, le benzothiadiazole, le benzothiazole, la quinazoline, la quinoléine, le dansyle, le diazobenzène, le diphénylanthracène, le dicarboximide, le phénanthrène, la phénanthroline, la phénanthridine, la phénoxazine, le phényléthynyle, le phénylimidazole, la flavone, le fluorène, le naphtalène, l'oxadiazole, la pyrazoline, le spiropyrane, le stilbène, le thiadiazole, les dérivés du thiazole, de préférence la diallyl-fluorescéine (I), l'allyl-rhodamine B (II), la 4'-allyloxy-3-hydroxyflavone (III), le 2,5-bis(5-tert-butyl-benzoxazol-2-yl)thiophène (IV), le tert-butyl-pyrène (V) ou la fluorescéine (VI), et la base du matériau de revêtement étant une laque, une silicone ou une dispersion aqueuse de résines, de préférence des résines acryliques et alkydes et le matériau de revêtement formant un code d'identification se révélant sous forme de rayonnement fluorescent après exposition du matériau de revêtement à un rayonnement de longueur d'onde de 250 à 650 nm.

2. Procédé de marquage de matières plastiques, consistant à recouvrir la surface interne ou externe de matières plastiques d'un revêtement de surface contenant une substance fluorescente,qui prévoit un recouvrement total de la surface marquée ou à imprimer le code sous forme numérique, alphanumérique ou géométrique, de préférence sous forme de code-barres ; ce marquage peut être lu après exposition de la matière plastique marquée à un rayonnement ultraviolet en suivant son émission fluorescente dans la lumière visible par un détecteur, de préférence par une caméra CCD, **caractérisé en ce qu'un** matériau de revêtement pour le marquage de matière plastique selon la revendication 1 est utilisé, tandis qu'une couche de matériau de revêtement est appliquée avec une épaisseur de 1 à 5 µm, de préférence de 2 µm, de préférence sous la forme de trame d'impression ayant une taille de point non inférieure à 10 µm et la couche de revêtement appliquée contient un code d'identification arbitraire, préalablement établi, réalisé grâce à la composition de marqueurs fluorescents contenus dans le matériau de revêtement, présentant un signal correspondant particulier de détecteur numérique de type CCD.

3. Procédé d'identification de matière plastique marquée à l'aide de l'effet de photoluminescence d'un matériau de revêtement contenant une substance fluorescente, impliquant une source de rayonnement ultraviolet et un détecteur optique, de préférence une caméra CCD, suivant l'émission fluorescente du matériau de revêtement dans la lumière visible, permettant la lecture du code sous forme numérique, alphanumérique ou géométrique, **caractérisé en ce que** la matière plastique marquée avec le matériau de revêtement selon la revendication 1 appliqué sur la matière plastique sous une forme de trame d'impression ayant une taille de point non inférieure à 10 µm, avec la couche ayant une épaisseur de 1 à 5 µm, de préférence de 2 µm, est exposée à un rayonnement de longueur d'onde de 250 à 650 nm puis à une fluorescence dans la plage de 300 à 700 nm, de préférence dans la plage supérieure à 500 nm, du matériau de revêtement est analysée pour lire un code d'identification imprimé ou pour déterminer le rayonnement caractéristique émis par la combinaison de marqueurs fluorescents contenus dans le matériau de revêtement sur la surface de la matière plastique.
